# EUROPÄISCHE PATENTSCHRIFT

(11) **EP 2 643 655 B1**
(45) Veröffentlichungstag und Bekanntmachung des Hinweises auf die Patenterteilung: **08.10.2014**
(21) Anmeldenummer: 11770747.1
(22) Anmeldetag: 13.10.2011
(51) Int. Cl.: G01B 1/00, G01B 5/012

(54) **MESSVORRICHTUNGEN FÜR KOORDINATENMESSGERÄTE**
MEASUREMENT APPARATUSES FOR COORDINATE MEASUREMENT INSTRUMENTS
DISPOSITIFS DE MESURE POUR APPAREILS DE MESURE DE COORDONNÉES

(30) Priorität: 23.11.2010 DE 102010051921; 19.04.2011 DE 102011007681
(43) Veröffentlichungstag der Anmeldung: 02.10.2013
(73) Patentinhaber: Carl Zeiss Industrielle Messtechnik GmbH, 73447 Oberkochen (DE)
(72) Erfinder: ENGEL, Thomas, 73432 Aalen (DE)
(74) Vertreter: Patentanwälte Bressel und Partner mbB
(86) Internationale Anmeldenummer: PCT/EP2011/067884
(87) Internationale Veröffentlichungsnummer: WO 2012/069250

(56) Entgegenhaltungen:
- EP-A2- 1 079 201
- CH-A5- 644 688
- DE-A1- 4 117 408
- DE-A1- 10 040 756
- DE-B3-102006 035 540
- JP-A- 2000 292 114
- US-A1- 2007 137 057

## Beschreibung

Die Erfindung betrifft neuartige Messvorrichtungen für die Koordinatenmessung, insbesondere für ein Koordinatenmessgerät oder für ein anderes Gerät (z.B. Werkzeugmaschine), das für die Koordinatenmessung eingesetzt werden kann. Die Messvorrichtung weist einen Schaft und ein am Schaft befestigtes Tastelement oder Einmesselement auf. Außerdem betrifft die Erfindung Verfahren zur Herstellung dieser Messvorrichtungen.

Koordinatenmessgeräte dienen der Bestimmung von Koordinaten, insbesondere der kartesischen Koordinaten (X, Y, Z) eines Oberflächenpunktes eines Objekts.

Der Messtaster eines Koordinatenmessgerätes dient der Vermessung des Objekts. Die Vermessung des Objekts erfolgt durch Antasten von dessen Oberfläche. Der Messtaster weist einen Schaft, beispielsweise in Form eines beweglich gelagerten dünnen Stabs (Stiftes), und ein Tastelement am Ende des Schafts, beispielsweise eine Tastkugel, auf. Die Kugelform ermöglicht eine Positionsbestimmung aus jeder praktikablen Anfahrrichtung an ein Objekt, wobei der Abstand der Kugelaußenfläche zu ihrem Zentrum im Rahmen der Fertigungstoleranzen konstant ist.

Einmessvorrichtungen für Koordinatenmessgeräte dienen der Überprüfung von Messtastern und der Bestimmung von Kalibrierparametern. Sie weisen einen Schaft und ein Einmesselement, meist eine Einmesskugel, auf. Dabei kann das Einmesselement taktil, z.B. mit dem Messtaster, angetastet werden oder auch berührungslos, insbesondere optisch.

Bei hoch genauen Koordinatenmessgeräten ist die geringe Toleranz der Rundheit (Kugelform) der Einmesskugel für die spätere erreichbare Messgenauigkeit von Vorteil. Rundheitsfehler der Einmesskugel können das Kalibrierungsergebnis beeinflussen. Typischerweise wird bei der Kalibrierung die Einmesskugel als ideale runde Kugel angenommen. Aufgrund dieser Annahme führt bei der Kalibrierung jede Abweichung von der Kugelform zu Fehlern oder Toleranzen der Kalibrierparameter. Somit wirken sich Rundheitsfehler der Einmesskugel auf die Vermessung von Koordinatenmessgeräten aus. Typischerweise haben gute Einmesskugeln einen Restfehler in der Rundheit von typischerweise 0,5 µm bis 1 µm. Dieser Wert scheint klein zu sein, ist aber bei Koordinatenmessgeräten mit einer Auflösung von bis zu 0,3 µm erheblich. Auch wenn der Fehler bei der Kalibrierung in manchen Fällen ausgemittelt wird, bleibt dennoch ein Restfehler im Bereich von typischerweise ein bis zwei Zehntel µm.

Eine Hauptursache des Rundheitfehlers liegt darin, dass bei bisherigen Fertigungsprozessen die Kugeln am Ende des Fertigungsprozesses, nachdem die Kugelform bereits mit geringer Toleranz erreicht ist und die Oberfläche geglättet ist, noch gebohrt werden. In diese Bohrung wird dann der Kugelschaft eingeklebt. Die Kräfte, die bei der Bohrung an der Kugel entstehen, führen zu leichten Verwerfungen im Material, die die runde Form der Kugel negativ beeinflussen. Außerdem wird das unter mechanischer Spannung stehende Gefüge der Kugel durch die Bohrung unterbrochen, sodass das Spannungsfeld verändert wird und sich die Form der Kugel auch in anderen Bereichen verändert.

Die gleichen Probleme wie bei Einmesskugeln existieren in analoger Form auch bei der Anbringung von Tastkugeln an ihrem Schaft.

Das Tastelement oder das Einmesselement kann jedoch auch anders als kugelförmig geformt sein, z.B. zylindrisch, scheibenförmig oder kegelförmig. Auch bei solchen Formen führen Bohrungen zu unerwünschten Veränderungen der Geometrie des Tastelements oder des Einmesselements.

Im Stand der Technik werden folgende Lösungen offenbart:
DE 10040756 A1 betrifft einen Taststift für Koordinatenmessgeräte, bestehend aus einem Aufnahmekörper einem Schaft und einem Antastelement, bei dem der Aufnahmekörper und das Antastelement mit dem Schaft mittels eines Lotes verbunden sind.
DE 102006035540 offenbart einen Taststift mit einem Schaft, der eine Taststiftspitze zum Berühren eines mit einer Koordinatenmessmaschine auszumessenden Werkstückes aufweist, und einem den Schaft fixierenden Ankopplungskörper zur Ankopplung an die Koordinatenmessmaschine. Der Schaft ist beispielsweise aus Hartmetall gebildet. An der im Betrieb zum Werkstück weisenden Spitze ist eine Kugel vorgesehen, die beispielsweise durch eine komplementäre Formbildung an der Schaftspitze und Einkleben der Kugel oder durch Löten mit dem Schaft verbunden ist.

CH 644699 offenbart einen Messtaster, bei dem eine kugelförmige Tastspitze aus beispielsweise Rubin auf den Tasterschaft aufgelötet oder aufgeklebt ist.

DE 4117408 A1 zeigt einen Abtaster für einen Wegeaufnehmer mit einem in einen Wegeaufnehmer mit einem Gewinde einschraubbaren Halter. Der Abtaster besitzt an seinem in der Zeichnung oberen Ende eine zylindrische Öffnung, in die mit Spiel eine Messspitze eingesetzt ist. Diese Messspitze hat im Wesentlichen einen kreiszylinderförmigen Aufbau und endet an ihrer dem Halter abgewandten Seite in einer Halbkugelform. Die Messspitze ist mittels eines Heißklebstoffs, der hitzeverträglich ist, in die Öffnung eingeklebt.

US 20070137057 zeigt einen Taster mit einem Stift und einer sphärischen Spitze. Der Stift kann in ein Loch eingeführt sein, das in der Spitze gebohrt ist. Alternativ kann die sphärische Spitze direkt an das Ende des Stiftes geklebt sein, beispielsweise in eine Ausnehmung am Ende des Stiftes.

US 20070137057 zeigt einen Taster mit einem Stift und einer sphärischen Spitze. Die Spitze kann an den Stift durch Schweißen, z.B. Widerstandsschweißen, angebunden sein. Am Ende des Stiftes kann zu diesem Zweck ein Zapfen vorgesehen sein, an den die Spitze geschweißt wird. Der Zapfen kann von einer Lippe umgeben sein, welche die Oberfläche der Spitze nahezu berührt.

JP 2000292114 offenbart einen Taster mit einem Schaft und einer sphärischen Spitze. An die Spitze ist eine Schraube aus Edelstahl mittels Widerstandsschweißen angeschweißt. Mit der Schraube wird die Spitze an dem Schaft befestigt, indem die Schraube in ein Loch in dem Schaft eingedreht wird.

Die Aufgabe der Erfindung bestand darin, Formfehler bei Tastelementen und bei Einmesselementen zu vermeiden, insbesondere Rundheitsfehler bei Einmesskugeln und kugelförmigen Tastkugeln.

Als Lösungen werden eine Messvorrichtung nach Anspruch 1, ein Tastelement oder Einmesselement nach Anspruch 7, sowie Verfahren nach Anspruch 8 und Anspruch 9 vorgeschlagen. Die abhängigen Ansprüche 2-6 und 10 betreffen besonders vorteilhafte Ausführungsformen der Messvorrichtung bzw. der Verfahren. Daneben wird ein Koordinatenmessgerät nach Anspruch 11 vorgeschlagen.

Die Erfindung betrifft entsprechend eine Messvorrichtung für die Koordinatenmessung, insbesondere für ein Koordinatenmessgerät oder für ein anderes Gerät (z.B. Werkzeugmaschine), das für die Koordinatenmessung eingesetzt werden kann. Die Messvorrichtung weist einen Schaft und ein am Schaft befestigtes Tastelement oder ein am Schaft befestigtes Einmesselement auf, wobei die Befestigung des Tastelements oder des Einmesselements am Schaft ohne Ausnehmung, im Speziellen ohne Bohrung, im Tastelement oder Einmesselement derart ausgeführt ist, dass das Tastelement oder das Einmesselement über einen auf die Oberfläche des Tastelements oder des Einmesselements aufgebrachten Zapfen am Schaft befestigt ist, wobei der Zapfen mit einem Lasersinterverfahren auf der Oberfläche des Tastelements oder des Einmesselements erzeugt ist. Dadurch werden Formfehler bei Tastelementen oder bei Einmesselementen, insbesondere Rundheitsfehler bei Einmesskugeln oder Tastkugeln, vermieden oder zumindest minimiert.

Der Begriff "Messvorrichtung" bezeichnet Einmessvorrichtungen und Messtaster, die in Koordinatenmessgeräten oder im Zusammenhang mit der Koordinatenmessung, insbesondere zum Einmessen von Koordinatenmessgeräten, von Werkzeugmaschinen oder anderen Geräten im Messbetrieb, eingesetzt werden und die schon in der Einleitung dieser Beschreibung erläutert wurden.

Die Lösungen der Erfindung sind sowohl auf Einmessvorrichtungen als auch auf Messtaster, und im speziellen sowohl auf Tastelemente als auch auf Einmesselemente anwendbar. Die in der Beschreibung vorkommenden Ausdrücke "Tastelement oder Einmesselement" und "Tastelement/Einmesselement" bringen diese beiden Fälle zum Ausdruck und bedeuten nicht, dass Tastelement und Einmesselement dieselbe Sache bezeichnen. Es ist aber auch möglich, einen Messtaster als Einmessvorrichtung und ein Tastelement als Einmesselement zu verwenden.

Der Begriff "der/ein Schaft" bedeutet einen Schaft für ein Einmesselement wenn sich die Offenbarung oder der Anspruch im ersten Fall auf ein Einmesselement bezieht. D.h. die Form, Größe, Art und Material des Schaftes sind dann an eine Einmessvorrichtung und das dazugehörige Einmesselement angepasst. Der Begriff "der/ein Schaft" bedeutet einen Schaft für ein Tastelement wenn sich die Offenbarung oder der Anspruch im zweiten Fall auf ein Tastelement bezieht. D.h. die Größe, Form, Art und Material des Schaftes sind dann an einen Messtaster und das dazugehörige Tastelement angepasst. Es ist somit entweder ein Schaft für ein Einmesselement oder ein Schaft für ein Tastelement gemeint, was nicht ausschließt, dass beide Schäfte im besonderen Fall identisch sein können.

Ein Tastelement oder ein Einmesselement kann verschiede Formen aufweisen, wie Kugel, Zylinder, oder die Form eines Kugelausschnitts, wie z.B. eine Äquatorregion einer Kugel als Scheibe, eine Kugelkappe, oder eine Halbkugel.

Der Begriff "ohne Ausnehmung im Tastelement oder im Einmesselement" bedeutet insbesondere, dass aus einem Tastelement oder Einmesselement kein Material zur Verschaffung einer Ausnehmung auf der Oberfläche, die auch als "Vertiefung" bezeichnet werden kann, entfernt wurde/ist. Insbesondere ist keine Ausnehmung vorhanden, in die ein Schaft eingeführt werden könnte, um den Schaft am Tastelement oder Einmesselement zu befestigen. Insbesondere ist keine Bohrung im Tastelement oder im Einmesselement bzw. in dessen Oberfläche vorhanden.

Die Erfindung betrifft auch ein Tastelement oder ein Einmesselement, welches mittels eines auf die Oberfläche des Tastelements oder des Einmesselements aufgebrachten Zapfens am Schaft befestigt ist, wobei der Zapfen mit einem Lasersinterverfahren erzeugt ist. Anders ausgedrückt ist der auf der Oberfläche des Tastelements oder Einmesselements aufgebrachte Zapfen an den Schaft gefügt und der Zapfen stellt das Verbindungselement zwischen dem Tastelement und seinem Schaft oder dem Einmesselement und seinem Schaft dar. Diese Ausführungsform weist keine Ausnehmung, insbesondere keine Bohrung, im Tastelement oder im Einmesselement auf. Zur Befestigung eines Tastelements oder Einmesselements mit einem Zapfen am Schaft sind verschiedene Varianten denkbar. Besonders bevorzugte Ausführungsformen sind nachfolgend erläutert.

Eine spezielle Ausführungsform der Erfindung betrifft ein Tastelement oder ein Einmesselement, das mittels eines auf die Oberfläche des Tastelements oder auf die Oberfläche des Einmesselements aufgebrachten Zapfens in einer Ausnehmung im Schaft befestigt ist. Bei dieser Ausführungsform ist eine Ausnehmung im Schaft vorhanden, wobei die Verbindung zwischen Zapfen und Schaft z.B. formschlüssig gestaltet ist. Gegenüber der Befestigung eines Schaftes in einer Bohrung des Tastelements/Einmesselements hat diese Ausführungsform auch folgenden Vorteil: Ein auf das Tastelement/Einmesselement aufgebrachter Zapfen kann länger gestaltet sein als eine Bohrung im Tastelement/Einmesselement, deren Länge beispielsweise durch die Dimensionierung des Tastelements/Einmesselements begrenzt ist. Durch einen entsprechend längeren Zapfen kann eine räumlich längere Verbindung zwischen Schaft und Tastelement/Einmesselement hergestellt werden, als dies bei einer Bohrung der Fall ist.

Vorzugsweise haben sowohl die Ausnehmung im Schaft als auch der Zapfen eine zylindrische Form. Andere Konturen der Ausnehmung des Schaftes und des Zapfens sind ebenfalls möglich, wie beispielsweise kreisförmig oder mehreckig, wie z.B. Viereck, Sechseck oder Achteck. Die Befestigung des Zapfens in der Ausnehmung kann auf verschiedene Art und Weise erfolgen, beispielsweise durch Pressen, Klemmen, Kleben, Löten, Schweißen, insbesondere Widerstandsschweißen, oder Schrauben, wobei bei letzterer Variante der Zapfen mit einem Gewinde versehen ist und die Ausnehmung mit einem passenden Innengewinde versehen ist. Die Ausnehmung im Schaft ist vorzugsweise eine Bohrung. Die Ausnehmung kann mit einer Entlüftungsöffnung versehen sein, die sich durch den Schaft erstreckt, beispielsweise in Z-Richtung (entlang der Längsachse des Zapfens), und durch die durch den eingeführten Zapfen verdrängte Luft entweichen kann.

In einer anderen Ausführungsform weist der Zapfen (nicht aber das Tastelement oder das Einmesselement, an dessen Oberfläche der Zapfen befestigt ist) einen von außen zugänglichen Hohlraum oder eine Ausnehmung auf, worin der Schaft befestigt werden kann. In einer vorteilhaften Variante hat der Zapfen die Form eines Hohlzylinders oder einer Röhre. In den Hohlzylinder oder die Röhre kann der Schaft eingeführt werden. Die Außenkontur der Röhre kann im Querschnitt eine beliebige Geometrie aufweisen, wie beispielsweise kreisförmig oder mehreckig, wie z.B. Viereck, Sechseck oder Achteck. Ebenso kann der Hohlraum der Röhre im Querschnitt eine beliebige Geometrie aufweisen, wie beispielsweise kreisförmig oder mehreckig.

In der zuvor genannten Ausführungsform weist der Schaft vorzugsweise einen Teil oder ein Element auf, dessen Form zu der Form der Ausnehmung des Zapfens komplementär ist, so dass das Teil oder Element die Ausnehmung ausfüllt. Die Befestigung des Schaftes in der Ausnehmung des Zapfens kann auf verschiedene Art und Weise erfolgen, beispielsweise durch Pressen, Klemmen, Kleben, Löten, Schweißen, insbesondere Widerstandsschweißen, oder Schrauben, wobei bei letzterer Variante der Schaft mit einem Gewinde versehen ist und die Ausnehmung im Zapfen mit einem passenden Innengewinde versehen ist.

Der Zapfen wird erfindungsgemäß mit einem Lasersinterverfahren auf der Oberfläche des Tastelements oder des Einmesselements erzeugt. Lasersintern ist ein Verfahren, bei dem räumliche Strukturen durch Sintern aus einem pulverförmigen Ausgangsstoff hergestellt werden. Die räumliche Struktur, in diesem Fall ein Zapfen, wird Schicht für Schicht auf der Oberfläche des Tastelements oder des Einmesselements durch Einwirkung eines Laserstrahls aufgebaut, wobei die eingetragene Energie des Laserstrahls eine Sinterung des pulverförmigen Ausgangsstoffs bewirkt. Auch ein auf das Tastelement/Einmesselement durch Lasersintern aufgebrachter Zapfen kann länger gestaltet sein als eine Bohrung im Tastelement/Einmesselement, deren Länge beispielsweise durch die Dimensionierung des Tastelements/Einmesselements begrenzt ist. Dadurch werden die oben bereits erwähnten Vorteile erzielt.

Der pulverförmige Ausgangsstoff für das Lasersintern ist beispielsweise ein Kunststoff, ein Metallpulver oder Keramikpulver. Somit können Zapfen aus verschiedenen Materialien auf der Oberfläche des Tastelements oder des Einmesselements erzeugt werden. In einer bevorzugten Ausführungsform bestehen das Tastelement oder das Einmesselement und der Zapfen aus dem gleichen Material. In einer weiteren bevorzugten Ausführungsform bestehen der Zapfen und der Schaft aus dem gleichen Material.

In noch einer weiteren Ausführungsform besteht der Zapfen aus einem Material, dessen Ausdehnungskoeffizient zwischen dem Ausdehnungskoeffizient des Tastelements oder Einmesselements und dem Ausdehnungskoeffizient des Schafts liegt. Dadurch können Verspannungen aufgrund thermischer Veränderungen reduziert oder minimiert werden, wenn der Zapfen zwischen Tastelement oder Einmesselement und Schaft angeordnet ist.

Gemäß der vorherigen Ausführungen zum Lasersintern betrifft die Erfindung auch ein Verfahren zur Befestigung eines Tastelements oder eines Einmesselements für ein Koordinatenmessgerät an einem Schaft, wobei bei dem Verfahren
- auf die Oberfläche des Tastelements oder des Einmesselements durch Lasersintern ein Zapfen aufgebracht wird und
- der Zapfen am Schaft, insbesondere in einer Ausnehmung im Schaft, befestigt wird.

Der lasergesinterte Zapfen kann eine beliebige Querschnittsform aufweisen, wie beispielsweise kreisförmig, gezahnt oder mehreckig wie z. B. Viereck, Sechseck, Achteck. Entlang der Längsrichtung können sich auf der Oberfläche des lasergesinterten Zapfens Nuten erstrecken, die im Falle einer Klebung des Zapfens in eine Ausnehmung des Schaftes als Klebertaschen dienen können.

Der Zapfen kann, auch in Kombination mit den zuvor genannten Formen, einen von außen zugänglichen Hohlraum oder eine Ausnehmung aufweisen, worin der Schaft befestigt werden kann. Ein bevorzugtes Beispiel hierfür ist ein Zapfen in Form eines Hohlzylinders oder Röhrchens.

Auch die Form entlang der Längsachse des Zapfens (Z-Richtung) kann beliebig gewählt werden, sowohl bei einem lasergesinterten als auch bei jedem anderen Zapfen, wobei Zapfen mit einer zylindrischen oder konischen Form bevorzugt sind.

Einmesselemente oder Tastelemente, wie z.B. Einmesskugeln und Tastkugeln, sind typischerweise aus Metall, insbesondere Stahl, Keramik, insbesondere Aluminiumoxid, Siliziumnitrit, Siliziumkarbit, oder Kristall, beispielsweise Rubin, Saphir oder Diamant, gefertigt. Häufig werden nichtmetallische Materialen für Einmesselemente oder Tastelementeverwendet, insbesondere Keramiken oder Kristalle. Andererseits ist es wünschenswert, den auf die Oberfläche des Tastelements oder des Einmesselements aufgebrachten Zapfen aus Metall zu fertigen, wodurch höhere Steifigkeiten als bei anderen Materialien erreicht werden können. Es ist daher nötig, eine haltbare Verbindung zwischen einem metallischen Zapfen, hergestellt durch Lasersintern, und dem nichtmetallischen Kugelwerkstoff herzustellen. Dazu schlägt die vorliegende Erfindung eine vorteilhafte Ausführungsform einer Messvorrichtung vor, bei der das Tastelement oder das Einmesselement aus einem nichtmetallischen Material besteht, zumindest ein Teil der Oberfläche des Tastelements oder des Einmesselements mit einem Haftvermittler beschichtet ist und auf der Haftvermittlerschicht ein metallischer Zapfen mit einem Lasersinterverfahren erzeugt ist.

Geeignete Haftvermittler sind Metalle, beispielsweise aus Aluminium, Chrom, Nickel oder metallischen Legierungen, chemisch aufgebrachte Schichten, Kunststoffe, Primersubstanzen, oder sonstige bekannte Haftvermittler. In einer speziellen Ausführungsform ist die Haftvermittlerschicht eine Metallschicht, vorzugsweise aus dem gleichen Metall wie der Zapfen. Die Metallbeschichtung auf der Oberfläche des Tastelements oder des Einmesselements dient hierbei als Haftvermittler zwischen Tastelement/Einmesselement und Zapfen. Eine Metallschicht kann mittels üblicher Techniken, wie beispielsweise Aufdampfen, chemische Gasphasenabscheidung (CVD) oder physikalische Gasphasenabscheidung (PVD), erzeugt werden. Vorteilhaft ist beispielsweise das Aufdampfen in einem Vorvakuum von 0,01 mbar bis 0,1 mbar.

Es ist auch möglich, die Oberfläche des Tastelements oder des Einmesselements anzuätzen, um für den nachfolgenden Schritt des Lasersinterns eine gute und haltbare Grundlage zu bilden. Dabei können ggf. Anteile aus dem Material des Tastelements oder des Einmesselements freigelegt werden, ohne dass dies als "Ausnehmung" im Einmesselement oder im Tastelement im oben genannten Sinne zu verstehen ist. Eine Ausnehmung im obigen Sinne ist insbesondere derart beschaffen, dass ein Schaft darin eingeführt werden könnte, um eine feste Verbindung zwischen Schaft und Tastelement/Einmesselement zu schaffen. Insbesondere wird beim Anätzen kein Material des Tastelements oder des Einmesselements mit mechanischen Werkzeugen abgetragen und insbesondere wird beim Anätzen keine Vertiefung im Tastelement oder Einmesselement erzeugt, in die ein Schaft einführbar wäre.

Entsprechend zu der zuvor beschriebenen Ausführungsform betrifft die Erfindung auch ein Verfahren zur Befestigung eines Tastelements, das aus einem nichtmetallischen Material besteht, oder eines Einmesselements für ein Koordinatenmessgerät, das aus einem nichtmetallischen Material besteht, an einem Schaft, wobei bei dem Verfahren
- an einer Stelle auf die Oberfläche des Tastelements oder des Einmesselements eine Haftvermittlerschicht, insbesondere eine Metallschicht, aufgebracht wird, und
- auf die Haftvermittlerschicht durch Lasersintern ein metallischer Zapfen aufgebracht wird
- der Zapfen am Schaft, vorzugsweise in einer Ausnehmung im Schaft, befestigt wird.

In einer bevorzugten Ausführungsform sind der Zapfen und die Metallschicht aus dem gleichen Metall gebildet.

In einer Variante der Messvorrichtung ist der Zapfen mit einem elastischen Klebstoff in einer Ausnehmung, insbesondere einer Bohrung, des Schaftes derart befestigt, dass die Oberfläche des Tastelements oder des Einmesselements nicht am Schaft anliegt, das Zapfenende nicht am Ausnehmungsgrund, insbesondere einem Bohrungsgrund, anliegt und zumindest der Zwischenraum zwischen Zapfenende und Ausnehmungsgrund mit dem elastischen Klebstoff gefüllt ist. Mit dieser Ausführungsform kann die Steifigkeit der Messvorrichtung in X- und Y-Richtung (d.h. vertikal zur Längsachse des Schaftes) und Z-Richtung (Längsachsenrichtung des Schaftes) in bestimmten Grenzen eingestellt werden. Die Quersteifigkeiten in X-Richtung und Y-Richtung werden durch die Führung des Zapfens in der Schaftausnehmung bestimmt, wobei die Steifigkeit typischerweise umso größer ist, je dichter der Zapfen an der Wand der Ausnehmung, insbesondere der Wand einer Bohrung, anliegt. Bevorzugt ist ein zum Außen-Durchmesser des Zapfens passgenauer Innen-Durchmesser der Ausnehmung, so dass der Zapfen ohne Spiel an den Wandungen der Ausnehmung im Schaft anliegt. Dadurch, dass das Zapfenende in Z-Richtung nicht am Ausnehmungsgrund anliegt und der Zwischenraum zwischen Zapfenende und Ausnehmungsgrund mit einem elastischen Klebstoff gefüllt ist, wird in Z-Richtung eine geringere Steifigkeit erzielt als in X- und Y-Richtung. Durch die Elastizitätseigenschaften des eingesetzten Klebstoffs kann die Steifigkeit in Z-Richtung in gewissen Grenzen durch Wahl des Klebstoffs gesteuert werden, wobei der Klebstoff nach Art einer Feder wirkt. Auch der Abstand des Zapfenendes vom Ausnehmungsgrund, der Durchmesser der Bohrung oder die Abmessungen der Ausnehmung quer zur Z-Richtung und die Schaftlänge beeinflussen die Steifigkeit in Z-Richtung. Dadurch, dass die Oberfläche des Tastelements oder des Einmesselements, beispielsweise eine Kugeloberfläche, nicht am Schaft, genauer am Ende des Schaftes, anliegt, ist das Tastelement oder das Einmesselement in Z-Richtung relativ zum Schaft beweglich. Geeignete elastische Klebstoffe sind beispielsweise Zweikomponentenklebstoffe auf Harzbasis oder feuchtehärtende Klebstoffe. Weitere geeignete elastische Klebstoffe sind beispielsweise Methylmethacrylat-Klebstoffe und silanvernetzende Polymerklebstoffe.

In einer Ausführungsform ist der Zapfen über eine Länge von ca. 0,5 - 2 cm, mehr bevorzugt etwa 0,5 - 1,5 cm und am meisten bevorzugt über eine Länge von etwa 1 cm in eine Ausnehmung eines Schaftes eingeführt. Dadurch kann eine vorteilhaft hohe Quersteifigkeit erzielt werden.

Entsprechend der zuvor beschriebenen Ausführungsform betrifft die Erfindung auch ein Verfahren zur Befestigung eines Tastelements oder Einmesselements an einem Schaft, bei dem der Zapfen am Tastelement oder Einmesselement mit einem elastischen Klebstoff in einer Ausnehmung des Schaftes derart befestigt wird, dass die Oberfläche des Tastelements oder des Einmesselements nicht an dem Schaft anliegt, das Zapfenende nicht am Ausnehmungsgrund anliegt, wobei zumindest der Zwischenraum zwischen Zapfenende und Ausnehmungsgrund mit elastischem Klebstoff gefüllt wird.

Die Erfindung betrifft auch ein Verfahren zur Befestigung eines Tastelements oder eines Einmesselements, das einen Zapfen aufweist, welcher eine von außen zugängliche Ausnehmung aufweist wie zuvor beschrieben, beispielsweise einen Zapfen in Form eines Hohlzylinders oder Röhrchens. Bei diesem Verfahren wird der Schaft mit einem elastischen Klebstoff in der Ausnehmung des Zapfens derart befestigt, dass das Ende des Schaftes nicht am Grund der Ausnehmung im Zapfen anliegt, wobei zumindest der Zwischenraum zwischen dem Ende des Schaftes und dem Grund der Ausnehmung im Zapfen mit elastischem Klebstoff gefüllt wird.

Die Erfindung betrifft auch eine Messvorrichtung, bei der ein Tastelement oder ein Einmesselement über einen auf die Oberfläche des Tastelements oder Einmesselements aufgebrachten Zapfen am Schaft befestigt ist, wobei
der Zapfen eine von außen zugängliche Ausnehmung aufweist, und der Schaft mit einem elastischen Klebstoff in der Ausnehmung des Zapfens derart befestigt ist, dass das Ende des Schaftes nicht am Grund der Ausnehmung im Zapfen anliegt, wobei zumindest der Zwischenraum zwischen dem Ende des Schaftes und dem Grund der Ausnehmung im Zapfen mit elastischem Klebstoff gefüllt ist.

Die Erfindung wird nachfolgend anhand von Ausführungsbeispielen beschrieben. Es zeigen:
- Fig. 1: eine Einmessvorrichtung nach dem Stand der Technik,
- Fig. 2a - 2c: ein kugelförmiges Einmesselement und das Aufbringen eines Zapfens durch Lasersintern,
- Fig. 3: den Zusammenbau eines kugelförmigen Einmesselements mit aufgebrachtem Zapfen und eines Schaftes,
- Fig. 4: ein Einmesselement mit Zapfen, der mittels eines elastischen Klebstoffs in der Bohrung eines Schaftes befestigt ist,

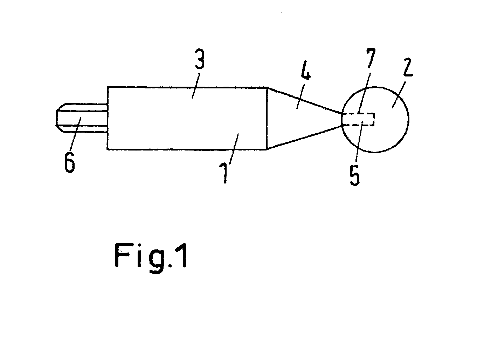

In der Fig. 1 ist eine Einmessvorrichtung nach dem Stand der Technik gezeigt. Sie besteht aus einem Schaft 1 und einem Einmesselement 2 in Kugelform. Der Schaft ist aus einem zylindrischen Teil 3 und einem kegelförmigen Teil 4 aufgebaut. Das kegelförmige Teil 4 mündet in eine Schaftspitze 5 und am zylindrischen Teil 3 ist ein Anschluss 6 vorgesehen. Das Einmesselement 2 weist eine Bohrung 7 auf, in der die Schaftspitze 5 zur Herstellung einer festen Verbindung zwischen Schaft und Einmesselement befestigt ist, beispielsweise durch Kleben.

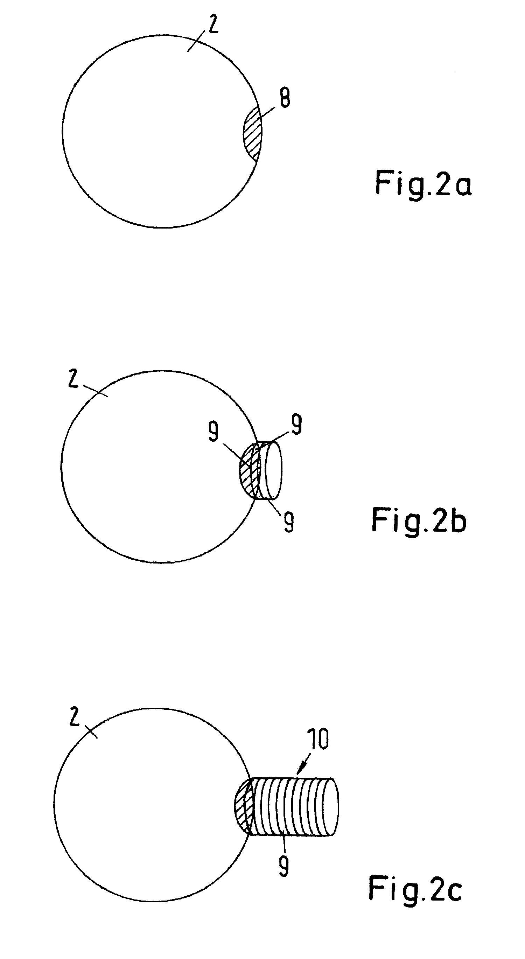

Die Fig. 2a - 2c zeigen die Aufbringung eines Zapfens auf einen Einmesselement 2 gemäß einem erfindungsgemäßen Ausführungsbeispiel. Das Einmesselement 2, hier kugelförmig, besteht aus einem elektrisch nicht leitfähigen Material und an einer Stelle der Oberfläche wurde eine Metallschicht 8 aufgebracht. Es kann sich bei der Schicht 8 auch um eine Schicht aus einem anderen geeigneten Haftvermittler handeln. In Fig. 2b ist durch ein Lasersinterverfahren ein Zapfenansatz auf die Metallschicht 8 aufgebracht, der aus mehreren einzelnen gesinterten Schichten 9 besteht. In Fig. 2c ist der Lasersinterprozess abgeschlossen und ein kompletter angesinterter Zapfen 10 auf die Oberfläche des Einmesselements 2 aufgebracht. Der Zapfen kann aus dem gleichen Metall bestehen wie die Metallschicht 8.

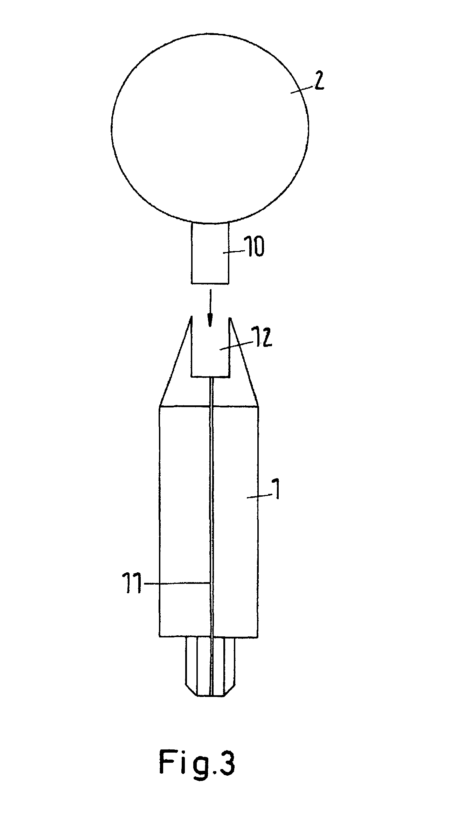

In der Fig. 3 ist der Zusammenbau aus einem Schaft 1 und einem Einmesselement 2 mit Zapfen 10 gezeigt. Der Schaft 1 ist in einem Schnitt entlang der Längsachse gezeigt und weist eine Ausnehmung 12 auf, in die der Zapfen 10 des Einmesselements 2 eingeführt und befestigt wird. Entlang seiner Längsachse (Z Richtung) weist der Schaft 1 eine Entlüftungsbohrung 11 auf, wodurch Luft, die durch den Zapfen 10 verdrängt wird, entweichen kann. Der Zapfen 10 kann in der Ausnehmung 12 durch Kleben, Pressen, Schrumpfen, Schrauben oder auch Löten befestigt werden.

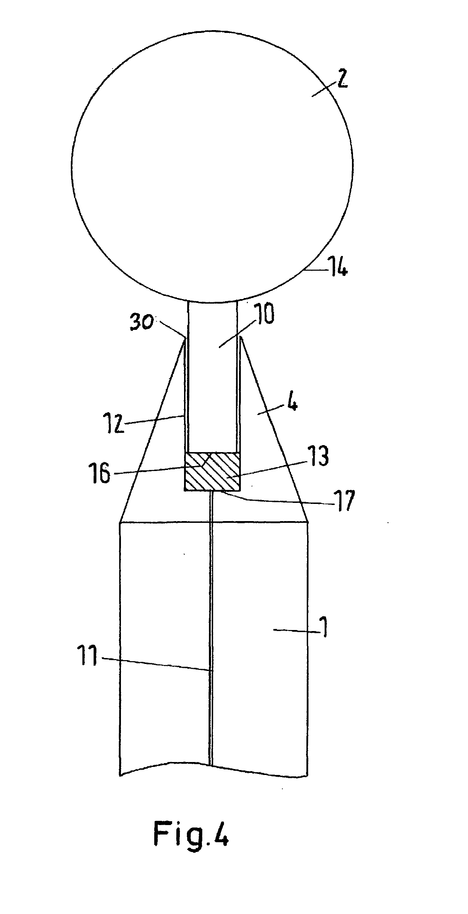

In der Fig. 4 ist eine Messvorrichtung gezeigt, bei der der Zapfen 10 mit einem elastischen Klebstoff 13 in der Bohrung 12 des Schaftes 1 derart befestigt ist, dass die Oberfläche 14 des Einmesselements 2 nicht am Schaft 1, insbesondere nicht an der aus dem kegelförmigen Teil 4 gebildeten Schaftspitze, anliegt. Dies bedeutet im vorliegenden Fall, dass die Oberfläche 14 des Einmesselements 2 nicht das Schaftende 30 berührt. Ferner liegt das Zapfenende 16 nicht am Bohrungsgrund 17 an und der Zwischenraum zwischen Zapfenende 16 und Bohrungsgrund 17 ist mit elastischem Klebstoff 13 gefüllt. Der Klebstoff 13 ist hier schraffiert dargestellt. Je nach Durchmesser des Zapfens 10 und der Bohrung 12 kann zwischen der Wandung der Bohrung 12 und dem Zapfen 10 ein mehr oder minder großer Spalt gebildet sein, in dem sich ebenfalls Klebstoff befinden kann.

Viele der zuvor gezeigten erfindungsgemäßen Ausführungsformen beziehen sich auf Einmessvorrichtungen für ein Koordinatenmessgerät. Analoge Ausführungsformen sind auch bei Messtastern möglich und werden ausdrücklich auch für Messtaster, aufweisend ein Tastelement und einen Schaft, angeregt.

## Patentansprüche

1. Messvorrichtung für die Koordinatenmessung, aufweisend
- einen Schaft (1) und
- ein am Schaft befestigtes Tastelement oder ein am Schaft befestigtes Einmesselement (2),
wobei die Befestigung des Tastelements oder des Einmesselements am Schaft ohne Ausnehmung im Tastelement oder im Einmesselement derart ausgeführt ist,
dass das Tastelement oder das Einmesselement über einen auf die Oberfläche (14) des Tastelements oder des Einmesselements (2) aufgebrachten Zapfen (10) am Schaft (1) befestigt ist, wobei der Zapfen (10) mit einem Lasersinterverfahren auf der Oberfläche des Tastelements oder des Einmesselements (2) erzeugt ist.

2. Messvorrichtung nach Anspruch 1, die eine Einmessvorrichtung für ein Koordinatenmessgerät ist und bei der das Einmesselement eine Einmesskugel ist.

3. Messvorrichtung nach Anspruch 1, die ein Messtaster für ein Koordinatenmessgerät ist und bei der das Tastelement eine Tastkugel ist.

4. Messvorrichtung nach einem der vorangehenden Ansprüche, wobei das Tastelement oder das Einmesselement (2) aus einem nichtmetallischen Material besteht, zumindest ein Teil der Oberfläche des Tastelements oder des Einmesselements mit einem Haftvermittler beschichtet ist und auf der Haftvermittlerschicht (8) ein metallischer Zapfen (10) mit einem Lasersinterverfahren erzeugt ist.

5. Messvorrichtung nach Anspruch 4, bei der die Haftvermittlerschicht eine Metallschicht (8) ist.

6. Messvorrichtung nach einem der vorangehenden Ansprüche, bei der der Zapfen (2) mit einem elastischen Klebstoff in einer Ausnehmung (12) des Schaftes (1) derart befestigt ist, dass
die Oberfläche (14) des Tastelements oder des Einmesselements (2) nicht am Schaft (1) anliegt
das Zapfenende (16) nicht am Ausnehmungsgrund (17) anliegt, und
zumindest der Zwischenraum zwischen Zapfenende (16) und Ausnehmungsgrund (17) mit dem elastischen Klebstoff (13) gefüllt ist.

7. Tastelement oder Einmesselement (2) für ein Koordinatenmessgerät, aufweisend einen auf die Oberfläche (14) des Tastelements oder des Einmesselements (2) mit einem Lasersinterverfahren aufgebrachten Zapfen (10) zur Befestigung an einem Schaft (1).

8. Verfahren zur Befestigung eines Tastelements oder eines Einmesselements (2) für ein Koordinatenmessgerät an einem Schaft (1), wobei bei dem Verfahren
- auf die Oberfläche des Tastelements oder des Einmesselements durch Lasersintern ein Zapfen (10) aufgebracht wird und
- der Zapfen (10) am Schaft (1) befestigt wird.

9. Verfahren zur Befestigung eines Tastelements für ein Koordinatenmessgerät, oder eines Einmesselements (2) für ein Koordinatenmessgerät, an einem Schaft (1), wobei das Tastelement/das Einmesselement aus einem nichtmetallischen Material besteht und wobei bei dem Verfahren
- an einer Stelle auf die Oberfläche des Tastelements oder des Einmesselements eine Haftvermittlerschicht (8) aufgebracht wird,
- auf die Haftvermittlerschicht (8) durch Lasersintern ein metallischer Zapfen (10) aufgebracht wird, und
- der Zapfen (10) am Schaft befestigt wird.

10. Verfahren nach Anspruch 8 oder 9, bei dem der Zapfen (10) mit einem elastischen Klebstoff in einer Ausnehmung (12) des Schaftes (1) derart befestigt wird, dass die Oberfläche (14) des Tastelements oder des Einmesselements (2) nicht an dem Schaft anliegt und
das Zapfenende (16) nicht am Ausnehmungsgrund (17) anliegt,
wobei zumindest der Zwischenraum zwischen Zapfenende (16) und Ausnehmungsgrund (17) mit elastischem Klebstoff (13) gefüllt wird.

11. Koordinatenmessgerät, aufweisend eine Messvorrichtung nach einem der Ansprüche 1-6, oder ein Tastelement oder Einmesselement nach Anspruch 7.

## Claims

1. Measurement apparatus for co-ordinate measurement, comprising
- a shaft (1) and
- a probing element or reference element (2) attached to the shaft
wherein the probing element or reference element is attached to the shaft without a recess in the probing element or reference element, in such a way that the probing element or reference element is attached to the shaft (1) by means of a journal (10) located on the surface (14) of the probing element or reference element (2), wherein the journal (10) is produced by a laser sintering method on the surface of the probing element or reference element (2).

2. Measurement apparatus according to claim 1, which is a reference apparatus for a co-ordinate measurement machine and wherein the reference element is a reference sphere.

3. Measurement apparatus according to claim 1, which is a measurement stylus for a co-ordinate measurement machine and wherein the probing element is a probing sphere.

4. Measurement apparatus according to any one of the preceding claims wherein the probing element or the reference element (2) consists of a non-metallic material, at least a part of the surface of the probing element or the reference element is coated with an adhesion agent, and on the adhesion agent layer (8) a metallic journal (10) is formed by a laser sintering method.

5. Measurement apparatus according to claim 4, wherein the adhesion agent layer is a metal layer (8).

6. Measurement apparatus according to any one of the preceding claims, wherein the journal (2) is attached by an elastic adhesive in a recess (12) of the shaft (1) in such a way that the surface (14) of the probing element or the reference element (2) does not rest against the shaft (1), the journal end (16) does not rest against the base of the recess (17), and at least the intermediate space between the journal end (16) and the base of the recess (17) is filled with an elastic adhesive (13).

7. Probing element or reference element (2) for a co-ordinate measurement machine, comprising a journal (10) applied to the surface (14) of the probing element or reference element (2) by a laser sintering method, for attachment to a shaft (1).

8. Method for attaching a probing element or reference element (2) for a co-ordinate measurement machine to a shaft (1), wherein by way of the method
- a journal (10) is applied onto the surface of the probing element or reference element by laser sintering, and
- the journal (10) is attached to the shaft (1).

9. Method for attaching a probing element or reference element (2) for a co-ordinate measurement machine to a shaft (1), wherein the probing element or reference element consists of a non-metallic material and wherein by way of the method
- an adhesive agent layer (8) is applied at a site on the surface of the probing element or reference element,
- a metallic journal (10) is applied onto the adhesive agent layer (8) by laser sintering, and
- the journal (10) is attached to the shaft.

10. Method according to claim 8 or 9, wherein the journal (10) is attached by an elastic adhesive in a recess (12) of the shaft (1) in such a way that the surface (14) of the probing element or reference element (2) does not rest against the shaft and the end of journal (16) does not rest against the base of the recess (17), wherein at least the intermediate space between the end of the journal (16) and the base of the recess (17) is filled with elastic adhesive (13).

11. Co-ordinate measurement machine, comprising a measurement apparatus according to any one of claims 1-6, or a probing element or reference element according to claim 7.

## Revendications

1. Dispositif de mesure pour la mesure de coordonnées, présentant
- une tige (1) et
- un élément de balayage fixé au niveau de la tige ou un élément d'étalonnage (2) fixé au niveau de la tige, sachant que la fixation de l'élément de balayage ou de l'élément d'étalonnage est réalisée sur la tige sans évidement dans l'élément de balayage ou dans l'élément d'étalonnage de telle manière que l'élément de balayage ou l'élément d'étalonnage est fixé sur la tige (1) par l'intermédiaire d'un tourillon (10) appliqué sur la surface (14) de l'élément de balayage ou de l'élément d'étalonnage (2), sachant que le tourillon (10) est généré au moyen d'un procédé de frittage au laser sur la surface de l'élément de balayage ou de l'élément d'étalonnage (2).

2. Dispositif de mesure selon la revendication 1, qui est un dispositif d'étalonnage pour un appareil de mesure de coordonnées et dans le cadre duquel l'élément d'étalonnage est une sphère d'étalonnage.

3. Dispositif de mesure selon la revendication 1, lequel est un système de balayage de mesure pour un appareil de mesure de coordonnées et dans le cadre duquel l'élément de balayage est une sphère de balayage.

4. Dispositif de mesure selon l'une quelconque des revendications précédentes, sachant que l'élément de balayage ou l'élément d'étalonnage (2) est constitué d'un matériau non métallique, qu'au moins une partie de la surface de l'élément de balayage ou de l'élément d'étalonnage est revêtue d'un promoteur d'adhérence et qu'un tourillon (10) métallique est produit sur la couche de promoteur d'adhérence (8) à l'aide d'un procédé de frittage au laser.

5. Dispositif de mesure selon la revendication 4, dans le cadre duquel la couche de promoteur d'adhérence est une couche métallique (8).

6. Dispositif de mesure selon l'une quelconque des revendications précédentes, dans le cadre duquel le tourillon (2) est fixé à l'aide d'une substance adhésive élastique, dans un évidement (12) de la tige (1) de telle manière que
la surface (14) de l'élément de balayage ou de l'élément d'étalonnage (2) ne repose pas au niveau de la tige (1), l'extrémité de tourillon (16) ne repose pas au niveau de la base de l'évidement (17), et
au moins l'espace intermédiaire entre l'extrémité de tourillon (16) et la base de l'évidement (17) est rempli de la substance adhésive élastique (13).

7. Elément de balayage ou élément d'étalonnage (2) pour un appareil de mesure de coordonnées, présentant un tourillon (10) installé sur la surface (14) de l'élément de balayage ou de l'élément d'étalonnage (2) à l'aide d'un procédé de frittage par laser, destiné à être fixé au niveau d'une tige (1).

8. Procédé servant à fixer un élément de balayage ou un élément d'étalonnage (2) pour un appareil de mesure de coordonnées au niveau d'une tige (1), sachant que lors du procédé
- on installe sur la surface de l'élément de balayage ou de l'élément d'étalonnage un tourillon (10) par un frittage au laser ; et
- on fixe le tourillon (10) au niveau de la tige (1).

9. Procédé servant à fixer un élément de balayage pour un appareil de mesure de coordonnées, ou un élément d'étalonnage (2) pour un appareil de mesures de coordonnées, au niveau d'une tige (1), sachant que l'élément de balayage et/ou l'élément d'étalonnage sont constitués d'un matériau non métallique, et sachant que lors du procédé,
- on applique au niveau d'un emplacement sur la surface de l'élément de balayage ou de l'élément d'étalonnage, une couche de promoteur d'adhérence (8) ;
- on applique sur la couche de promoteur d'adhérence (8) un tourillon (10) métallique par un frittage au laser ; et
- on fixe le tourillon (10) au niveau de la tige.

10. Procédé selon la revendication 8 ou 9, dans le cadre duquel le tourillon (10) est fixé dans un évidement (12) de la tige (1) à l'aide d'une matière adhésive élastique de telle manière que la surface (14) de l'élément de balayage ou de l'élément d'étalonnement (2) ne repose pas sur la tige et
l'extrémité de tourillon (16) ne repose pas au niveau de la base d'évidement (17),
sachant qu'au moins l'espace intermédiaire entre l'extrémité de tourillon (16) et la base de l'évidement (17) est rempli d'une matière adhésive élastique (13).

11. Appareil de mesure de coordonnées, présentant un dispositif de mesure selon l'une quelconque des revendications 1 à 6, ou présentant un élément de balayage ou un élément d'étalonnage selon la revendication 7.
